# EUROPÄISCHE PATENTANMELDUNG

(11) **EP 4 462 523 A1**
(43) Veröffentlichungstag der Anmeldung: **13.11.2024**
(21) Anmeldenummer: 23172561.5
(22) Anmeldetag: 10.05.2023
(51) Int. Cl.: H01M 6/52, B07C 5/00, G06N 20/00, H01M 10/54, G06N 3/02

(54) **VERFAHREN UND VORRICHTUNG ZUR WENIGSTENS TEILWEISEN ZERLEGUNG EINER BATTERIE**

(71) Anmelder: Siemens Aktiengesellschaft, 80333 München (DE)
(72) Erfinder: Baldauf, Manfred, 91056 Erlangen (DE); Franke, Martin, 14089 Berlin (DE); Schulte, Sascha, 91315 Höchstadt (DE)
(74) Vertreter: Siemens Patent Attorneys

(57) **Zusammenfassung**

Es wird ein Verfahren zur wenigstens teilweisen Zerlegung einer Batterie mittels einer Zerlegeeinheit vorgeschlagen, wobei die Zerlegeeinheit eine Erfassungseinheit zur optischen Erfassung eines Zerlegebereiches umfasst, und die Batterie innerhalb des Zerlegebereiches angeordnet ist. Das Verfahren ist gekennzeichnet dadurch, dass mittels der Zerlegeeinheit basierend auf durch die Erfassungseinheit optisch erfassten Daten und hinterlegten batteriespezifischen Daten ein oder mehrere kritische Bereiche des Zerlegebereiches ermittelt werden, innerhalb welchen keine Zerlegemaßnahmen durch die Zerlegeeinheit erfolgen.

Weiterhin betrifft die Erfindung eine Zerlegeeinheit, die zur Durchführung des Verfahrens ausgebildet ist.

## Beschreibung

Die Erfindung betrifft ein Verfahren gemäß dem Oberbegriff des Patentanspruches 1 sowie eine Vorrichtung gemäß dem Oberbegriff des Patentanspruches 10.

Speicherbatterien für elektrische Fahrzeuge oder vergleichbare Anwendungen müssen nach Ablauf ihrer regulären Lebensdauer für ihr Recycling geöffnet und zerlegt werden.

Die erwartete Varianz der verschiedenen Batterietypen wird für Zerlegebetriebe zu einer großen Herausforderung, da sehr große Stückzahlen ausschließlich mit industrialisierten Prozessen zu erreichen sind.

Bisherige Zerlegungen basieren auf einem im Wesentlichen manuellen Prozess, da besonders geschulte Personen jedes neue Batteriesystem explorativ/experimentell zerlegen können, ohne dabei gefährliche Prozessschritte, wie beispielsweise das Zerschneiden der Batterie an potenziell gefährlichen Stellen, auszuführen. Für eine automatisierte Zerlegung im industriellen Maßstab muss sichergestellt werden, dass die Zerlegeeinheiten die sichere Prozessschritte für jeden Batterietyp ausführen können.

Vollautomatisierte Verfahren zur Zerlegung von Batterien, die für eine Vielzahl von Batterietypen, erfolgt, sind aus dem Stand der Technik nicht bekannt. Bisher erfolgt die Zerlegung von Batterien manuell oder die Batterie wird schlicht vollständig geschreddert und/oder eingeschmolzen.

Der vorliegenden Erfindung liegt die Aufgabe zugrunde, ein Verfahren für eine automatisierte und sichere Zerlegung einer Batterie bereitzustellen.

Die Aufgabe wird durch ein Verfahren mit den Merkmalen des unabhängigen Patentanspruches 1 sowie durch eine Vorrichtung mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur wenigstens teilweisen Zerlegung einer Batterie mittels einer Zerlegeeinheit, wobei die Zerlegeeinheit eine Erfassungseinheit zur optischen Erfassung eines Zerlegebereiches umfasst, und die Batterie innerhalb des Zerlegebereiches angeordnet ist, ist gekennzeichnet dadurch, dass mittels der Zerlegeeinheit basierend auf durch die Erfassungseinheit optisch erfassten Daten und hinterlegten batteriespezifischen Daten ein oder mehrere kritische Bereiche des Zerlegebereiches ermittelt werden, innerhalb welchen keine Zerlegemaßnahmen durch die Zerlegeeinheit erfolgen.

Im Folgenden wird unter einer Zerlegung der Batterie die wenigstens teilweise Zerlegung der Batterie verstanden. Es ist somit nicht erforderlich, dass die Batterie vollständig zerlegt wird. Allerdings kann ein vollständiges Zerlegen vorgesehen sein. Weiterhin umfasst der Begriff des Zerlegens der Batterie das wenigstens teilweise Zerlegen eines Bauteils beziehungsweise Bestandteils der Batterie, beispielsweise einer Batteriezelle. Die Batterie ist insbesondere eine Lithium-Ionen-Batterie.

Gemäß der vorliegenden Erfindung basiert die Zerlegung der Batterie auf optischen Daten sowie auf, beispielsweise innerhalb der Zerlegeeinheit durch eine Speicherung, hinterlegten batteriespezifischen Daten. Die batteriespezifischen Daten können eine Information über den jeweiligen Batterietyp umfassen. Weiterhin können die batteriespezifischen Daten durch einen Server und/oder durch eine Cloud bereitgestellt werden. Hierbei kann der Batterietyp basierend auf den erfassten optischen Daten und durch einen Abgleich mit einer Datenbank von batteriespezifischen Daten vorab der Zerlegung ermittelt werden.

Erfindungsgemäß ermittelt die Zerlegeeinheit kritische Bereiche, innerhalb welchen keine Zerlegungsmaßnahmen erfolgen. Besonders bevorzugt erfolgen innerhalb der kritischen Bereiche keine destruktiven Zerlegungsmaßnahmen. Die kritischen Bereiche können räumlich dreidimensionale oder zweidimensionale Bereiche ausbilden, innerhalb welchen keine Zerlegungsmaßnahmen erfolgen. Mit anderen Worten sind die kritischen Bereiche frei von Zerlegungsmaßnahmen. Die kritischen räumlichen Bereiche werden basierend auf den erfassten optischen Daten, das heißt visuell, sowie basierend auf den batteriespezifischen Daten ermittelt. Dadurch ist es vorteilhafterweise möglich an den Batterietyp angepasste kritische Bereiche zu verwenden.

Die Zerlegeeinheit kann beispielsweise als computergestützter Roboter ausgebildet sein, der derartige Befehle umfasst, dass dieser basierend auf der optischen Erfassung, beispielsweise mittels Positionen von Schrauben, Steckern und/oder Gehäuseöffnungen der Batterie, die kritischen Bereiche erkennt beziehungsweise ermittelt. Die Zerlegeeinheit führt somit eine visuelle Erfassung und Analyse bezüglich der zu zerlegenden Batterie durch.

Zur Steuerung der Zerlegeeinheit können räumliche Koordinaten basierend auf den erfassten optischen Daten und/oder den batteriespezifischen Daten und in Abhängigkeit der ermittelten kritischen räumlichen Bereiche bestimmt werden. Die Zerlegeeinheit wird anschließend, wie ein Roboter, basierend auf den ermittelten räumlichen Koordinaten gesteuert.

Gemäß der vorliegenden Erfindung ist somit die Zerlegeeinheit sinnbildlich in Kenntnis darüber, innerhalb welcher räumlichen Bereiche (kritische Bereiche) keine Zerlegung aus Sicherheitsgründen erfolgen darf. Dadurch wird vorteilhafterweise die Sicherheit der Zerlegung verbessert und sichergestellt. Weiterhin wird eine automatisierte Zerlegung ermöglicht, sodass sich die Skalierbarkeit der Zerlegekapazität gegenüber manuellen Verfahren deutlich erhöht.

Die erfindungsgemäße Zerlegeeinheit zur wenigstens teilweisen Zerlegung einer Batterie, wobei die Zerlegeeinheit eine Erfassungseinheit zur optischen Erfassung eines Zerlegebereiches umfasst, ist dadurch gekennzeichnet, dass die Zerlegeeinheit dazu ausgebildet ist, basierend auf durch die Erfassungseinheit optisch erfassten Daten und hinterlegten batteriespezifischen Daten ein oder mehrere kritische Bereiche des Zerlegebereiches zu ermitteln, innerhalb welchen keine Zerlegemaßnahmen durch die Zerlegeeinheit erfolgen.

Es ergeben sich zum erfindungsgemäßen Verfahren gleichartige, gleichwertige und gleichwirkende Vorteile und/oder Ausgestaltungen der erfindungsgemäßen Zerlegeeinheit.

Gemäß einer vorteilhaften Ausgestaltung der Erfindung wird basierend auf den ermittelten kritischen Bereichen die Zerlegeeinheit als Zerlegemaßnahme ein Schnittmuster, ein Sägemuster und/oder ein Fräsmuster zur wenigstens teilweisen Zerlegung der Batterie ermittelt.

Dadurch ist vorteilhafterweise sichergestellt, dass die genannten destruktiven Zerlegemaßnahmen lediglich in nicht kritischen Bereichen erfolgen. Mit anderen Worten erfolgen in den kritischen Bereichen keine der genannten Zerlegemaßnahmen. Dadurch wird vorteilhafterweise die Sicherheit der Zerlegung der Batterie weiter erhöht. Somit wird ein Verfahren bereitgestellt, bei dem in Kenntnis des vorab identifizierten Batterietyps und der ermittelten kritischen Bereiche ein Schnittmuster, Sägemuster und/oder Fräsmuster ermittelt wird, welches bei der zu zerlegenden Batterie, trotz nicht vorhandener technischer Zeichnungen bezüglich der Batterie, nicht vorhandener 3D-Daten und/oder nicht vorhandener Zerlegeanleitung, eine sichere und automatisierte Zerlegung ermöglicht.

In einer vorteilhaften Weiterbildung der Erfindung wird das ermittelte Schnittmuster, das ermittelte Sägemuster und/oder das ermittelte Fräsmuster mittels der Zerlegeeinheit außerhalb der kritischen Bereiche durchgeführt.

Dadurch ist vorteilhafterweise die sichere Zerlegung der Batterie sichergestellt.

Gemäß einer vorteilhaften Ausgestaltung der Erfindung wird vorab der wenigstens teilweisen Zerlegung der Batterietyp der Batterie ermittelt, wobei die Zerlegemaßnahmen und/oder die kritischen Bereiche in Abhängigkeit des Batterietyps ermittelt werden.

Die Ermittlung das Batterietyps kann vorteilhafterweise basierend auf den optischen Daten erfolgen. Mit anderen Worten erkennt die Erfassungseinheit beziehungsweise die Zerlegeeinheit selbständig und basierend auf einer optischen beziehungsweise visuellen Erfassung den Batterietyp der zu zerlegenden Batterie. Dadurch kann das Verfahren zur Zerlegung vorteilhafterweise für viele verschiedene Batterietypen, das heißt in diesem Sinne unabhängig vom Batterietyp, durchgeführt werden.

Weiterhin wird dadurch vorteilhafterweise berücksichtigt, dass verschiedene Batterietypen verschiedene kritische Bereiche aufweisen können. Mit anderen Worten können die kritischen Bereiche vom Batterietyp abhängig sein.

In einer vorteilhaften Weiterbildung der Erfindung umfassen die batteriespezifischen Daten Herstellerdaten bezüglich der kritischen Bereiche der Batterie.

Dadurch können vorteilhafterweise Herstellerdaten, beispielsweise Sollschnittbereiche, Sollsägebereiche und/oder Sollfräsbereiche, innerhalb welchen die Zerlegung der Batterie sicher ist, zur Ermittlung der kritischen Bereiche herangezogen werden.

Gemäß einer vorteilhaften Ausgestaltung der Erfindung ermittelt die Zerlegeeinheit die kritischen Bereiche mittels eines maschinellen Lernverfahrens.

Mit anderen Worten erfolgt ein selbständiges Lernen der Zerlegeeinheit, sodass dieses ein selbstlernendes System ausbildet. Hierzu kann die Zerlegeeinheit ein entsprechend ausgebildetes und eingerichtetes neuronales Netz umfassen.

Beispielsweise wird das neuronale Netz mittels einer anfangs manuellen Zerlegung von Batterien und basierend auf der optischen/visuellen Erfassung der Batterie trainiert. Dadurch kann das neuronale Netz den inneren Zustand und/oder Aufbau der Batterie erkennen und identifizieren. Ist die Batterie eindeutig identifiziert, das heißt wurde der Batterietyp ermittelt, dann kann die Batterie manuell und/oder durch die Zerlegeeinheit in einem geschützten Raum (abgesicherter oder gesicherter Zerlegeraum) zerlegt werden, beispielsweise mittels Versuch und Irrtum (englisch: Trial-and-Error). Für das Training des neuronalen Netzes beziehungsweise der Zerlegeeinheit wird somit die Möglichkeit eines kritischen Schadens, das heißt ein nicht sicheres Zerlegen der Batterie, akzeptiert. Das neuronale Netz lernt mittels der durchgeführten Zerlegungen die kritischen Bereiche des jeweiligen Batterietyps. Mit anderen Worten ist die Zerlegeeinheit mittels des derart trainierten neuronalen Netzes in der Lage, kritische von unkritischen Bereichen zu unterscheiden und/oder selbständig zu erkennen. Die dadurch trainierte Zerlegeeinheit kann dann im regulären Betrieb basierend auf den optisch erfassten Daten die kritischen Bereiche ermitteln und eine sichere Zerlegung durchführen.

In einer vorteilhaften Weiterbildung der Erfindung erfolgen somit maschinelle Lernverfahren zur Ermittlung der kritischen Bereiche virtuell und/oder in einem abgesicherten Zerlegeraum.

Das Training der Zerlegeeinheit kann somit bevorzugt auch virtuell erfolgen.

Gemäß einer vorteilhaften Ausgestaltung der Erfindung erfolgt beim maschinellen Lernen eine manuelle Zerlegung der Batterie, welche durch die Zerlegeeinheit optisch erfasst wird.

Dadurch kann die Zerlegeeinheit vorteilhafterweise mittels einer manuellen Zerlegung, die durch einen Fachmann durchgeführt wird, trainiert werden.

In einer vorteilhaften Ausgestaltung der Erfindung ist die Zerlegeeinheit als Roboter ausgebildet.

Hierbei kann der Roboter ein neuronales Netz umfassen, welches entsprechend für die Zerlegung von Batterien und das Ermitteln der zugehörigen kritischen Bereiche trainiert ist. Insbesondere ist die Zerlegeeinheit beziehungsweise der Roboter als Industrieroboter ausgebildet.

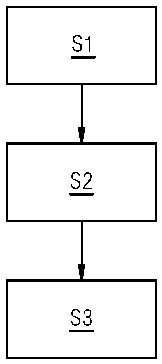

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Ablaufdiagramm eines Verfahrens gemäß einer Ausgestaltung der vorliegenden Erfindung.

Gleichartige, gleichwertige oder gleichwirkende Elemente können in der Figuren mit denselben Bezugszeichen versehen sein.

Die Figur zeigt ein Ablaufdiagramm eines Verfahrens gemäß einer Ausgestaltung der vorliegenden Erfindung. Gemäß dem Verfahren wird eine bereitgestellte Batterie wenigstens teilweise zerlegt.

Gemäß einem ersten Schritt S1 des Verfahrens werden mittels einer Erfassungseinheit der Zerlegeeinheit optische Daten bezüglich der zu zerlegenden Batterie erfasst. Die optischen Daten umfassen hierbei bevorzugt dreidimensionale optische Daten/Informationen bezüglich der zu zerlegenden Batterie. Es erfolgt somit eine optische Erkennung der Batterie und ihrer technischen und/oder räumlichen Merkmale. Die Erfassungseinheit kann als 3D-Scanner ausgebildet sein beziehungsweise zur optischen Erfassung einen 3D-Scanner umfassen.

Vorab der optischen Erfassung wurde die zu zerlegende Batterie in einem vorgesehenen Zerlegebereich angeordnet.

In einem zweiten Schritt S2 des Verfahrens erfolgt die Ermittlung von kritischen Bereichen durch die Zerlegeeinheit. Hierzu kann die Zerlegeeinheit eine Recheneinheit, insbesondere ein entsprechend ausgebildetes, eingerichtetes und trainiertes neuronales Netz umfassen. Die kritischen Bereiche sind dadurch gekennzeichnet, dass innerhalb der kritischen Bereiche keine Zerlegungsmaßnahmen, insbesondere keine destruktiven Zerlegungsmaßnamen, wie beispielsweise Schnittverfahren, Sägeverfahren und/oder Fräsverfahren, erfolgen. Die kritischen Bereiche sind somit zerlegemaßnahmenfrei.

Die kritischen Bereiche werden basierend auf den im ersten Schritt S1 erfassten optischen Daten und hinterlegten batteriespezifischen Daten ermittelt. Hierbei kann ein Abgleich der optischen Daten mit den batteriespezifischen Daten zur Ermittlung des Batterietyps erfolgen. Weiterhin können die batteriespezifischen Daten Herstellerdaten bezüglich Sollschnittbereiche, Sollsägebereiche und/oder Sollfräsbereiche umfassen. Dadurch erfolgt die Ermittlung der kritischen Bereiche in Abhängigkeit der erfassten optischen Daten und in Abhängigkeit des vor der Zerlegung ermittelten Batterietyps.

Gemäß einem dritten Schritt S3 des Verfahrens erfolgt die Zerlegung der Batterie mittels der Zerlegeeinheit. Hierbei erfolgen innerhalb der ermittelten kritischen Bereiche keine Zerlegemaßnahmen, insbesondere keine destruktiven Zerlegemaßnahmen. Zerlegemaßnahmen, wie beispielsweise Schnittverfahren, Sägeverfahren und/oder Fräsverfahren werden somit außerhalb der kritischen Bereiche zur Zerlegung der Batterie durchgeführt. Dadurch wird vorteilhafterweise eine möglichst sichere automatisierte Zerlegung der Batterie beziehungsweise von Batterien bereitgestellt.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- S1: erster Schritt
- S2: zweiter Schritt
- S3: dritter Schritt

## Patentansprüche

1. Verfahren zur wenigstens teilweisen Zerlegung einer Batterie mittels einer Zerlegeeinheit, wobei die Zerlegeeinheit eine Erfassungseinheit zur optischen Erfassung eines Zerlegebereiches umfasst, und die Batterie innerhalb des Zerlegebereiches angeordnet ist, **gekennzeichnet dadurch, dass** mittels der Zerlegeeinheit basierend auf durch die Erfassungseinheit optisch erfassten Daten und hinterlegten batteriespezifischen Daten ein oder mehrere kritische Bereiche des Zerlegebereiches ermittelt werden, innerhalb welchen keine Zerlegemaßnahmen durch die Zerlegeeinheit erfolgen.

2. Verfahren gemäß Anspruch 1, **gekennzeichnet dadurch, dass** basierend auf den ermittelten kritischen Bereichen die Zerlegeeinheit als Zerlegemaßnahme ein Schnittmuster, ein Sägemuster und/oder ein Fräsmuster zur wenigstens teilweisen Zerlegung der Batterie ermittelt.

3. Verfahren gemäß Anspruch 2, **gekennzeichnet dadurch, dass** das ermittelte Schnittmuster, das ermittelte Sägemuster und/oder das ermittelte Fräsmuster mittels der Zerlegeeinheit außerhalb der kritischen Bereiche durchgeführt wird.

4. Verfahren gemäß einem der vorhergehenden Ansprüche, **gekennzeichnet dadurch, dass** vorab der wenigstens teilweisen Zerlegung der Batterietyp der Batterie ermittelt wird, wobei die Zerlegemaßnahmen und/oder die kritischen Bereiche in Abhängigkeit des Batterietyps ermittelt werden.

5. Verfahren gemäß einem der vorhergehenden Ansprüche, **gekennzeichnet dadurch, dass** die batteriespezifischen Daten Herstellerdaten bezüglich der kritischen Bereiche der Batterie umfassen.

6. Verfahren gemäß einem der vorhergehenden Ansprüche, **gekennzeichnet dadurch, dass** die Zerlegeeinheit die kritischen Bereiche mittels eines maschinellen Lernverfahrens ermittelt.

7. Verfahren gemäß Anspruch 6, **gekennzeichnet dadurch, dass** das maschinelle Lernverfahren zur Ermittlung der kritischen Bereiche virtuell und/oder in einem abgesicherten Zerlegeraum erfolgt.

8. Verfahren gemäß Anspruch 6 oder 7, **gekennzeichnet dadurch, dass** beim maschinellen Lernen eine manuelle Zerlegung der Batterie erfolgt, welche durch die Zerlegeeinheit optisch erfasst wird.

9. Verfahren gemäß einem der vorhergehenden Ansprüche, **gekennzeichnet dadurch, dass** die Zerlegeeinheit als Roboter ausgebildet ist.

10. Zerlegeeinheit zur wenigstens teilweisen Zerlegung einer Batterie, wobei die Zerlegeeinheit eine Erfassungseinheit zur optischen Erfassung eines Zerlegebereiches umfasst, **dadurch gekennzeichnet, dass** die Zerlegeeinheit dazu ausgebildet ist basierend auf durch die Erfassungseinheit optisch erfassten Daten und hinterlegten batteriespezifischen Daten ein oder mehrere kritische Bereiche des Zerlegebereiches zu ermitteln, innerhalb welchen keine Zerlegemaßnahmen durch die Zerlegeeinheit erfolgen.
